# EUROPÄISCHE PATENTSCHRIFT

(11) **EP 1 946 049 B1**
(45) Veröffentlichungstag und Bekanntmachung des Hinweises auf die Patenterteilung: **23.01.2019**
(21) Anmeldenummer: 06807401.2
(22) Anmeldetag: 19.10.2006
(51) Int. Cl.: G01D 5/48, G01D 21/00, G01S 7/40, G01S 7/02

(54) **MESSGERÄT**
MEASURING DEVICE
APPAREIL DE MESURE

(30) Priorität: 31.10.2005 DE 102005052369
(43) Veröffentlichungstag der Anmeldung: 23.07.2008
(73) Patentinhaber: ROBERT BOSCH GMBH, 70442 Stuttgart (DE)
(72) Erfinder: MAHLER, Michael, 70771 Leinfelden-Echterdingen (DE); HOFFMANN, Ulli, 75223 Nieffern-Oeschelbronn (DE); KRAPF, Reiner, 72770 Reutlingen (DE); WIELAND, Christoph, 71083 Herrenberg-Kuppingen (DE); BRAUN, Heiko, 70771 Leinfelden-Echterdingen (DE)
(86) Internationale Anmeldenummer: PCT/EP2006/067572
(87) Internationale Veröffentlichungsnummer: WO 2007/051715

(56) Entgegenhaltungen:
- WO-A-02/44750
- DE-A1- 4 141 469
- US-A- 3 981 012
- US-A- 4 356 487

## Beschreibung

### Stand der Technik

Die Erfindung geht aus von einem Messgerät nach dem Oberbegriff des Anspruchs 1.

Es sind Messgeräte bekannt, die zur Erfassung einer Eigenschaft eines Gegenstands oder einer Umgebung ein Messsignal in einem Frequenzbereich aussenden, der für die Messung als vorteilhaft angesehen wird. Hierbei kann es vorkommen, dass das Messsignal andere, in dem gleichen Frequenzbereich arbeitende Geräte, wie Telekommunikationsgeräte, Datenübertragungsgeräte oder Messgeräte, stört oder von diesen Geräten gestört wird.

Aus der US 3 981 012 A ist ein Impulsradargerät mit einer Anordnung zur entstörenden Auswahl einer Zufallfrequenz bekannt. Nach der Auswahl einer Zufallsfrequenz wir zunächst keine Aussendung dieses Signals vorgenommen. Vielmehr wird bei der Vorrichtung der US 3 981 012 A zunächst eine "Horchphase" durchgeführt, in der nur der Empfänger arbeitet. In dieser Horchphase werden daher nur Störsignale empfangen, die mit einer eingestellten Überlagerungsfrequenz des Gerätes eine Anzeige, d.h. ein Messsignal ergeben würden. Wenn diese Horchmessung ergibt, dass die während der Horchphase empfan genen Störsignale unter einem vorgegebenen Grenzwert liegen - also die ausgewählte Zufallsfrequenz günstig ist - wird anschließend eine normale Impulssendung mit der ausgewählten Zufallsfrequenz vorgenommen. Wenn dagegen die Störsignale den vorgegeben Grenzwert überschreiten, wird die Ausgewählte Zufallsfrequenz verworfen.

Die Erfindung geht aus von einem Messgerät mit einer Sendeeinheit zum Senden eines in einem Frequenzbereich liegenden Messsignals, einer Sensoreinheit zum Empfangen eines vom Messsignal angeregten Auswertesignals und einer Steuereinheit zum Auswerten des Auswertesignals in ein Messergebnis.

Es wird vorgeschlagen, dass die Steuereinheit dazu vorgesehen ist, den Frequenzbereich vor einem Senden des Messsignals auf ein vom Messsignal unabhängiges Signal zu untersuchen. Ein erkanntes, vom Messsignal unabhängiges Signal gibt einen Hinweis auf ein Gerät, das vom Messsignal gestört werden könnte. Zweckmäßigerweise ist die Steuereinheit dazu vorgesehen, die Aussendung des Messsignals bei einem erkannten Signal zu unterbinden oder das Messsignal in Abhängigkeit vom erkannten Signal zu gestalten. Außerdem besteht die Möglichkeit, das erkannte Signal bei der Auswertung des Auswertesignals zu berücksichtigen und so zu einem zuverlässigen Messergebnis zu kommen. Eine geringe Störung für andere Geräte bei gleichzeitigem Erreichen eines guten Messergebnisses kann erfindungsgemäß erreicht werden, wenn die Steuereinheit dazu vorgesehen ist, ein Aussenden des Messsignals in Abhängigkeit von einer Eigenschaftserkennung von Material in der Umgebung der Sendeeinheit zu steuern, insbesondere bei einer Erkennung des Signals. Ist beispielsweise das Messgerät auf eine dämpfende Wand aufgesetzt, so kann die Leistung des Messsignals relativ hoch angesetzt werden. Befindet sich das Messgerät in der Luft oder an wenig dämpfenden Materialien, so wird die Leistung des Messsignals zweckmäßigerweise abgesenkt oder das Messsignal frequenzbandweise oder vollständig abgeschaltet. Zu diesem Zweck ist die Steuereinheit vorteilhafterweise dazu vorgesehen, eine Steuerung einer Sendeleistung in Abhängigkeit von einer Signaldämpfung der Umgebung auszuführen. Die Signaldämpfung kann durch eine Orientierungsmessung mit geringer Sendeleistung erfasst werden, bei der eine Materialeigenschaft von Material in der Nähe der Sendeeinheit und daraus die Signaldämpfung erfasst wird, beispielsweise eine Oberflächenreflexion der Umgebung, wie beispielsweise einer Wand.

Das Messgerät dient zweckmäßigerweise zum Messen und Darstellen einer physikalischen Größe und ist insbesondere ein Ortungsgerät oder ein Gerät zur Feuchtemessung, Materialmessung, Materialanalyse, zur Bohrtiefenmessung oder dergleichen. Als Messgerät kommt vorteilhaft auch ein Messgerät zur Gegenstandserkennung, wie beispielsweise ein Gerät zur Personenerkennung, ein Sicherheitssensor oder ein Entfernungsmessgerät in Betracht. Das erkannte Signal ist insbesondere ein schmalbandiges Signal, wie beispielsweise ein Radio- oder Radarsignal, ein Signal eine Kommunikationsgeräts in einem Standard wir Bluetooth, WLAN oder dergleichen, oder ein LSM-Bans-Signal. Die Untersuchung der Steuereinheit zielt zweckmäßigerweise auf das Erkennen eines Information tragenden Signals, wobei insbesondere allgemeines Rauschen vorteilhafterweise nicht als ein vom Messsignal unabhängiges Signal verstanden wird. Die Untersuchung des Frequenzbands wird vorteilhafterweise vor dem Beginn eines Messvorgangs durchgeführt .

In einer vorteilhaften Ausgestaltung der Erfindung ist die Sensoreinheit für einen Ultrabreitbandbetrieb vorgesehen. Hierdurch kann mit einer geringen spektralen Leistungsdichte ein gutes Messergebnis erreicht werden, beispielsweise durch eine gute Ortsauflösung eines gemessenen Gegenstands, einer guten Mehrzieltrennung und/oder einer hohen Messgenauigkeit in der Entfernungsmessung. Außerdem ist das Störpotenzial einer solchen Sensoreinheit gegenüber beispielsweise vorhandenen Radiodiensten wegen der geringen Leistungsdichte gering. Als Ultrabreitbandbetrieb wird die Nutzung eines Frequenzbereichs mit einer Bandbreite von mindestens 300 MHz oder von mindestens 15% der Mittenfrequenz des Frequenzbereichs verstanden. Die Mittenfrequenz ist vorzugsweise im Frequenzbereich von 1 GHz bis 15 GHz gewählt. Der Ultrabreitbandbetrieb kann durch Senden von Impulsfolgen, durch Senden in so genannten Pseudo-Noise-Folgen, durch ein Frequenzmoduliertes kontinuierliches Signal oder durch ein Frequenzshiftsystem erreicht werden. Zweckmäßigerweise und mit gleichem Vorteil ist die Sendeeinheit entweder alternativ oder zusätzlich für einen Ultrabreitbandbetrieb vorgesehen.

Eine Untersuchung auf ein vom Messsignal unabhängiges Signal ist besonders einfach und preisgünstig durchführbar, wenn die Untersuchung eine Ermittlung einer Leistung des Signals beinhaltet. Bei einer Leistungsmessung wird zweckmäßigerweise kein oder nur ein geringes Messsignal ausgesandt, so dass das Signal von keinem oder nur einem geringen Auswertesignal überlagert wird. Insbesondere ist die Steuereinheit dazu vorgesehen, auf das Signal mit einem Steuerbefehl zu reagieren, wenn die Leistung über einem Grenzwert liegt. Insbesondere wird die von einer Sensoreinheit gemessene Empfangsleistung mit einer Referenzempfangsleistung verglichen, beispielsweise der eines üblichen Rauschens.

Eine zuverlässige Erkennung des Signals kann erreicht werden, wenn die Steuereinheit dazu vorgesehen ist, vor der Untersuchung ein Störbeseitigungsmittel zu deaktivieren. Ein solches Störbeseitigungsmittel ist beispielsweise ein Frequenzfilter zur Ausfilterung von Handy-Strahlung oder ein Medianfilter, der insbesondere bei gepulster Störstrahlung ein Signal, das einen Puls aufweist, als "Ausreißer" erkennt und aus der Auswertung entfernt.

Eine zuverlässige Untersuchung kann erreicht werden wenn die Steuereinheit zu einem Unterbinden eines Senden vor der Untersuchung vorgesehen ist. Hierbei ist eine Sendeantenne insbesondere frei vom Messsignal gehalten. Das Unterbinden geschieht zweckmäßigerweise vor einem Beginn eines Messvorgangs, insbesondere vor einem ersten Senden nach einem Aktivieren oder einem Einschalten des Messgeräts.

Vorteilhafterweise beinhaltet die Untersuchung die Bestimmung eines Frequenzbands des Signals. Bei einer Auswertung können Daten aus diesem Frequenzband unberücksichtigt gelassen werden und somit kann die Auswertung zuverlässig durchgeführt werden. Außerdem kann die Sendeeinheit außerhalb dieses Frequenzbands senden und somit das erkannte Gerät nicht stören.

In einer weiteren vorteilhaften Ausgestaltung der Erfindung ist die Steuereinheit dazu vorgesehen, eine Auswertung des Auswertesignals in Abhängigkeit von dem erkannten Signal durchzuführen. Hierdurch kann ein Störeinfluss des stören den Signals gering gehalten werden, etwa indem bei der Auwertung störende Frequenzen oder ein störendes Frequenzband entweder nicht berücksichtigt, herausgemittelt oder kompensiert werden. Auf diese Weise kann selbst in "gestörter Umgebung" noch ein exaktes Messergebnis ermittelt werden. Die Abhängigkeit der Auswertung von dem erkannten Signal kann erreicht werden, wenn das Signal - oder daraus abgeleitete Daten - bei der Auswertung berücksichtigt werden.

Eine Störung fremder Geräte durch das Messgerät kann gering gehalten werden, wenn die Steuereinheit dazu vorgesehen ist, bei einer Erkennung des Signals ein Aussenden des Messsignals abzudämpfen, insbesondere zu unterbinden. Eine Abdämpfung kann geschehen, indem die Sendeleistung - zumindest in einem Frequenzbereich - unter die Sendeleistung gesteuert wird, die ohne ein erkanntes Signal abgestrahlt wird. Die Sendeleistung kann pauschal oder anhand der Stärke des erkannten Signals um ein vorgegebenes Maß reduziert werden. Das Maß kann ein Faktor sein. Das Maß kann anhand eines Datenfelds in der Steuereinheit abgelegt sein. Zur Unterbindung des Messsignals kann die Sendeeinheit ausgeschaltet beziehungsweise nicht eingeschaltet werden. Es ist auch möglich, das Sendesignal auf einen Nebenzweig zu schalten, beispielsweise durch eine Schaltung in elektrische Bauteile oder auf 50 Ohm gegen Masse. Hierbei wird insbesondere keine Abstrahlung auf eine Sendeantenne gegeben. Eine Reduzierung der Sendeleistung kann nicht nur durch eine geringere Pulshöhe, sondern alternativ oder zusätzlich durch eine geringere Pulswiederholfrequenz erreicht werden.

Es wird außerdem vorgeschlagen, dass die Untersuchung die Bestimmung eines Frequenzbands des Signals beinhaltet und ein Aussenden des Messsignals in diesem Frequenzband abgedämpft, insbesondere unterbunden wird. Insbesondere bei einem Ultrabreitbandgerät kann das Messsignal so abgeändert werden, dass das Nutzspektrum des Messgeräts nicht mehr mit dem erkannten Frequenzband des Signals überlappt oder in diesem Frequenzband die spektrale Leistungsdichte abgesenkt wird. Es ist hierbei auch möglich, mehrere Modulationsfrequenzen zu verwenden, um das Frequenzband auszusparen und gleichzeitig eine große Nutzbandbreite des Ultrabreitbandmessgeräts zu erhalten. Bei Pseudo-Noise-Folgen kann die Chiprate in Abhängigkeit vom erkannten Frequenzband abgeändert werden, wodurch sich die Bandbreite des Nutzsignals ändert und damit das Messsignal in einem oder mehreren bestimmten Frequenzbereichen abgeschwächt werden kann.

Insbesondere ein schwaches Signal kann erkannt werden, wenn die Untersuchung eine Pulsuntersuchung des Signals beinhaltet. Auf diese Weise kann ein Signal, beispielsweise ein Signal in dem bekannten Handy-Standard GSM, besonders einfach von Hintergrundrauschen unterschieden werden. Die Pulsuntersuchung umfasst beispielsweise eine Untersuchung einer Pulsfolge.

Eine geringe Beeinträchtigung des Messgeräts beziehungsweise eines weiteren Geräts kann erreicht werden, wenn die Steuereinheit dazu vorgesehen ist, bei einer Erkennung des Signals als gepulstes Signal ein Aussenden des Messsignals in Abhängigkeit von den Pulsen zu steuern. So kann beispielsweise ein Aussenden des Messsignals zwischen den Pulsen des Signals erfolgen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ortungsgerät an einer Wand in Sendereichweite eines Störsenders und
- Fig. 2: ein Ablaufdiagramm eines mit dem Ortungsgerät durchgeführten Ortungsverfahrens.

### Beschreibung der Ausführungsbeispiele

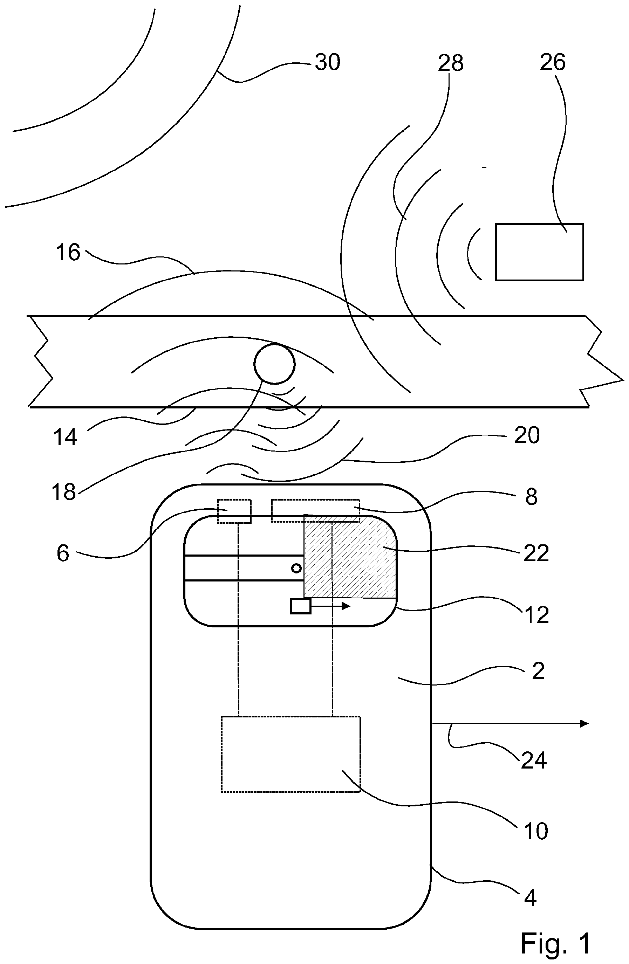

Figur 1 zeigt ein als Ortungsgerät 2 ausgeführtes Messgerät mit einem Gehäuse 4, einer Sendeeinheit 6 und einer Sensoreinheit 8. Mit der Sendeeinheit 6 und der Sensoreinheit 8 verbunden ist eine Steuereinheit 10 zum Steuern der Sendeeinheit 6 und der Sensoreinheit 8. Mit Hilfe einer Anzeigeeinheit 12 kann ein Messergebnis, in diesem Fall ein Ortungsergebnis, einem Bediener bildhaft dargestellt werden.

Bei einem Messvorgang wird das Ortungsgerät 2 - beispielsweise in Richtung eines Pfeils 24 - entlang einer Wand 14 geführt, die lediglich der Übersicht halber ein Stück weit entfernt vom Ortungsgerät 2 dargestellt ist. Hierbei wird von der Sendeeinheit 6 - gesteuert durch die Steuereinheit 10 - ein Messsignal 16 in Form von 0,5 ns kurzen Pulsen ausgesendet, mit denen eine Messsignalbandbreite von 2 GHz verbunden mit einer Mittenfrequenz von 4 GHz erreicht wird. Das Messsignal 16 wird von der Wand 14 und einem Objekt 18 in der Wand reflektiert und kehrt als Auswertesignal 20 zum Ortungsgerät 2 zurück, wird von der Sensoreinheit 8 empfangen und von der Steuereinheit 10 ausgewertet. Auf der Anzeigeeinheit 12 wird der bereits erfasste Bereich der Wand 14 mitsamt dem Objekt 18 dargestellt und ein noch nicht vom Ortungsgerät 2 erfasster Bereich 22 wird auf der Anzeige 12 schraffiert dargestellt.

Hinter der Wand 14 ist ein als Sende- und Empfangsgerät ausgeführtes Gerät 26 verborgen, das ein Signal 28, beispielsweise Radiowellen im Mikrowellenbereich, abstrahlt. Dieses Signal 28 durchdringt die Wand 14 und bildet ein Störsignal, da es zusammen mit dem Auswertesignal 20 von der Sensoreinheit 8 empfangen wird. Umgekehrt wiederum kann das Messsignal 16 ein Störsignal für das Gerät 26 bilden, das die Funktion des Geräts 26 beeinträchtigt. Des Weiteren ist ein Hintergrundsignal 30 dargestellt, das von der Sensoreinheit 8 empfangen werden kann und das von einem Hintergrundrauschen gebildet ist. Um eine Störung des Ortungsgeräts 2 oder des Geräts 26 gering zu halten, ist die Steuereinheit 10 dazu vorbereitet, ein Signalentstörverfahren zu steuern, bei dem die Sendeeinheit 6 oder ein Auswerteverfahren so gesteuert wird, dass eine Störung gering gehalten ist.

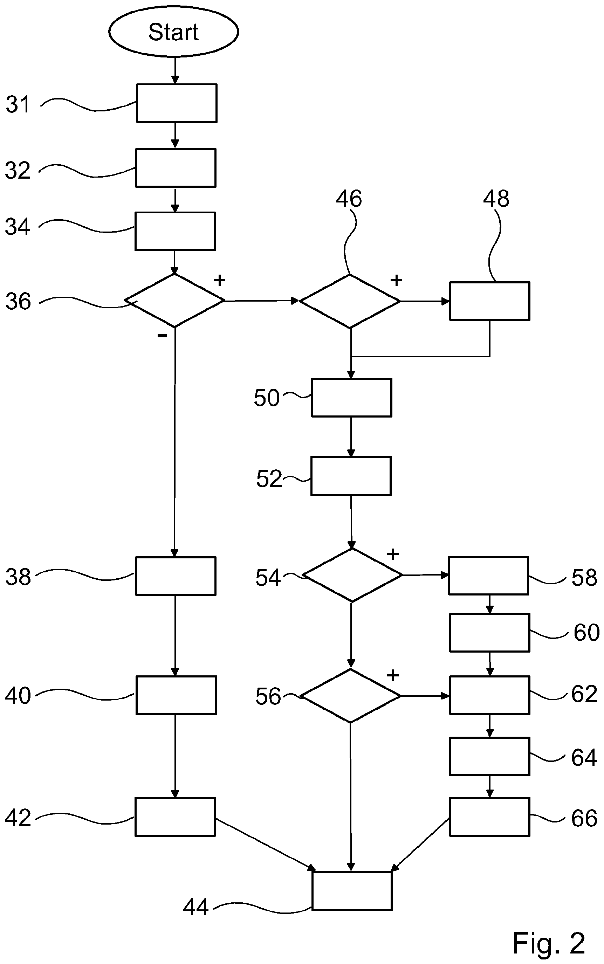

Ein Ausführungsbeispiel eines solchen Verfahrens ist in Figur 2 anhand eines Ablaufdiagramms dargestellt. Das Verfahren beginnt mit beispielsweise einer Messanforderung durch einen Bediener, die ein Auswerten des Auswertesignals 20 erfordert. Hierzu wird zunächst ein Senden deaktiviert 31, indem die Sendeeinheit 6 auf 50 Ohm gegen Masse geschaltet wird. Hierbei wird insbesondere keine Abstrahlung auf eine Sendeantenne gegeben. Außerdem wird in einer Deaktivierung 32 ein Störbeseitigungsmittel - beispielsweise ein Medianfilter - deaktiviert und anschließend in einer Untersuchung 34 der für das Messsignal 16 vorgesehene Frequenzbereich auf das Signal 28 oder ein ähnliches Signal hin untersucht. Hierzu wird ein von der Sensoreinheit 8 empfangenes Signal auf ein Information tragendes Signal 28 untersucht, wobei das Hintergrundsignal 30 nicht als solches identifiziert wird. Wird in einer Prüfung 36 kein solches Information tragendes Signal 28 erkannt, so wird ein Senden 38 des Messsignals 16 mit Hilfe der Sendeeinheit 6 veranlasst, wobei gegebenenfalls vorher das Störbeseitigungsmittel aktiviert wird. Das Auswertesignal 20 wird empfangen 40 und ausgewertet 42 und entsprechende Daten oder Grafiken werden auf der Anzeigeeinheit 12 dargestellt 44.

Für den Fall, dass bei der Prüfung 36 ein Information tragendes Signal 28 erkannt wird, wird in einer Pulsuntersuchung 46 untersucht, ob das Signal 28 ein gepulstes Signal ist. Für den Fall, dass das Signal ein gepulstes Signal ist, wird in einer Messsignalanpassung 48 ein Modus gestartet, der ein späteres eventuelles Aussenden des Messsignals 16, beispielsweise zwischen den Pulsen des Signals 28, veranlasst. Von der Steuereinheit 10 wird eine Eigenschaftserkennung 50 von Material in der Umgebung der Sendeeinheit gestartet, beispielsweise eine Dämpfungsmessung, eine Reflexionsmessung oder eine Materialerkennung, und hierfür mit Hilfe eines sehr leistungsschwachen Prüfsignals, das bis auf seine geringe Leistung mit dem Messsignal 16 vergleichbar ist, das Material der Wand 14 untersucht. Ein entsprechendes Untersuchungsergebnis wird in der Steuereinheit 10 hinterlegt. Hierfür wäre in Figur 2 die Eigenschaftserkennung 50 zusätzlich nach der Prüfung 36 einzuzeichnen, worauf der Übersichtlichkeit halber verzichtet wurde.

Nun wird eine Frequenzbanderkennung 52 durchgeführt, bei der ein Frequenzband ermittelt wird, in dem das Signal 28 liegt. Dieses Frequenzband umfasst alle Frequenzen des Signals 28. Die Reihenfolge der Messsignalanpassung 48, der Materialerkennung 50, der Frequenzbanderkennung 52 und der Pulsuntersuchung 46 ist hierbei beliebig.

In einer folgenden Sendeprüfung 54 wertet die Steuereinheit 10 die Ergebnisse der Frequenzbanderkennung 52, der Eigenschaftserkennung 50 und der Pulsuntersuchung 46 aus und entscheidet, ob das Messsignal 16 ausgesendet werden kann, ohne eine vermutliche Störung des Geräts 26 zu verursachen. Sollte dies nicht der Fall sein, so wird das in der Sendeeinheit 6 erzeugte Messsignal 16 auf einem Nebenpfad in elektrische Bauteile oder gegen Masse geleitet. Außerdem wird in einer Auswerteprüfung 56 von der Steuereinheit 10 entschieden, ob ein empfangenes Signal als Auswertesignal 20 verwendbar ist und ob eine Auswertung sinnvoll ist. Ist dies nicht der Fall, so wird eine entsprechende Information auf der Anzeigeeinheit 12 ausgegeben bzw. dargestellt.

Wird in der Sendeprüfung 54 jedoch entschieden, dass ein zumindest im Wesentlichen störungsfreies Senden des Messsignals 16 möglich ist, wird in einer Sendeanpassung 58 ein Sendemodus des Messsignals 16 in Abhängigkeit von der Frequenzbanderkennung, der Materialerkennung und/oder des Modus zur Sendung des Messsignals 16 angepasst. Hierbei wird beispielsweise zwischen Pulsen gesendet, eine Sendeleistung oder ein Sendefrequenzbereich bestimmt. Bei Verwendung von modulierten Signalen als Messsignal 16, zum Beispiel Pulsfolgen oder Pseudo-Noise-Folgen, wird die Frequenz des Messsignals 16 so eingestellt, dass das Nutzspektrum des Messsignals 16 nicht mehr mit dem erkannten Frequenzband des Signals 28 überlappt. Besonders vorteilhaft bei Pseudo-Noise-Folgen ist es, die Chiprate und somit die Bandbreite des Messsignals 16 zu ändern, um das Messsignal 16 im erkannten Frequenzbereich deutlich abzuschwächen. Ist das Messsignal 16 ein Signal, das einen Frequenzbereich kontinuierlich oder in Schritten durchläuft, kann das erkannte Frequenzband komplett ausgespart werden.

Nun wird das entsprechende Messsignal 16 ausgesendet 60 und das Auswertesignal 20 empfangen 62. Die Sendeleistung der Sendeeinheit 6 wird im erkannten Frequenzband stark abgesenkt oder das gesamte Messsignal 16 wird in seiner Leistung gegenüber dem Messsignal 16 ohne ein erkanntes Signal 28 abgesenkt. Sollte bei der Auswerteprüfung 56 auf kein Senden des Messsignals 16 entschieden worden sein, jedoch die Möglichkeit eines Auswertens gesehen werden, so wird von der Auswerteprüfung 56 direkt in den Empfang 62 weiter verwiesen. In einer von der Steuereinheit 10 veranlassten Auswertungsanpassung 64, die beispielsweise die Frequenzbanderkennung 52 berücksichtigt, wird das Signal 28 innerhalb des erkannten Frequenzbands von einer nachfolgenden Auswertung 66 ausgeschlossen. Im Übrigen wird das Messergebnis in der Auswertung 66 von der Steuereinheit 10 aus dem Auswertesignal 20 ermittelt und auf der Anzeigeeinheit 12 dargestellt 44.

## Patentansprüche

1. Messgerät mit einer Sendeeinheit (6) zum Senden (38, 60) eines in einem Frequenzbereich liegenden Messsignals (16), einer Sensoreinheit (8) zum Empfangen (40, 62) eines vom Messsignal (16) angeregten Auswertesignals (20) und einer Steuereinheit (10) zum Auswerten (42, 66) des Auswertesignals (20) in ein Messergebnis, wobei die Steuereinheit (10) dazu vorgesehen ist, den Frequenzbereich vor dem Senden (38, 60) des Messsignals (16) auf ein vom Messsignal (16) unabhängiges Signal (28) zu untersuchen **dadurch gekennzeichnet, dass** die Steuereinheit (10) dazu vorgesehen ist, ein Senden (60) des Messsignals (16) in Abhängigkeit von einer Eigenschaftserkennung von Material in der Umgebung der Sendeeinheit (6) zu steuern.

2. Messgerät nach Anspruch 1, **dadurch gekennzeichnet, dass** die Sensoreinheit (8) für einen Ultrabreitbandbetrieb vorgesehen ist.

3. Messgerät nach Anspruch 1 oder 2, **dadurch gekennzeichnet, dass** die Untersuchung eine Ermittlung einer Leistung des Signals (28) beinhaltet.

4. Messgerät nach einem der vorhergehenden Ansprüche, **dadurch gekennzeichnet, dass** die Steuereinheit (10) dazu vorgesehen ist, vor der Untersuchung ein Störbeseitigungsmittel zu deaktivieren (32).

5. Messgerät nach einem der vorhergehenden Ansprüche, **dadurch gekennzeichnet, dass** die Steuereinheit (10) zu einem Unterbinden eines Sendens (38) des Messsignals vor der Untersuchung vorgesehen ist.

6. Messgerät nach einem der vorhergehenden Ansprüche, **dadurch gekennzeichnet, dass** die Untersuchung die Bestimmung (52) eines Frequenzbands des Signals (28) beinhaltet.

7. Messgerät nach einem der vorhergehenden Ansprüche, **dadurch gekennzeichnet, dass** die Steuereinheit (10) dazu vorgesehen ist, eine Auswertung (66) des Auswertesignals (20) in Abhängigkeit von dem erkannten Signal (28) durchzuführen.

8. Messgerät nach einem der vorhergehenden Ansprüche, **dadurch gekennzeichnet, dass** die Steuereinheit (10) dazu vorgesehen ist, bei einer Erkennung des Signals (28) ein Senden (60) des Messsignals (16) abzudämpfen, insbesondere zu unterbinden.

9. Messgerät nach einem der vorhergehenden Ansprüche, **dadurch gekennzeichnet, dass** die Steuereinheit (10) dazu vorgesehen ist, eine Steuerung einer Sendeleistung in Abhängigkeit von einer Signaldämpfung der Umgebung auszuführen.

10. Messgerät nach einem der vorhergehenden Ansprüche, **dadurch gekennzeichnet, dass** die Untersuchung eine Pulsuntersuchung (46) des Signals (28) beinhaltet.

11. Messgerät nach einem der vorhergehenden Ansprüche, **dadurch gekennzeichnet, dass** die Steuereinheit (10) dazu vorgesehen ist, bei einer Erkennung des Signals (28) als gepulstes Signal (28) ein Senden (60) des Messsignals (16) in Abhängigkeit von den Pulsen zu steuern.

## Claims

1. Measuring device having a transmitting unit (6) for transmitting (38, 60) a measurement signal (16) in a frequency range, a sensor unit (8) for receiving (40, 62) an evaluation signal (20) excited by the measurement signal (16) and a control unit (10) for evaluating (42, 66) the evaluation signal (20) to form a measurement result, wherein the control unit (10) is provided for the purpose of examining the frequency range for a signal (28) independent of the measurement signal (16) before transmitting (38, 60) the measurement signal (16), **characterized in that** the control unit (10) is provided for the purpose of controlling transmission (60) of the measurement signal (16) on the basis of property detection of material in the environment of the transmitting unit (6) .

2. Measuring device according to Claim 1, **characterized in that** the sensor unit (8) is provided for ultra-wideband operation.

3. Measuring device according to Claim 1 or 2, **characterized in that** the examination comprises determining a power of the signal (28).

4. Measuring device according to one of the preceding claims, **characterized in that** the control unit (10) is provided for the purpose of deactivating (32) an interference removal means before the examination.

5. Measuring device according to one of the preceding claims, **characterized in that** the control unit (10) is provided for the purpose of preventing transmission (38) of the measurement signal before the examination.

6. Measuring device according to one of the preceding claims, **characterized in that** the examination comprises determining (52) a frequency band of the signal (28).

7. Measuring device according to one of the preceding claims, **characterized in that** the control unit (10) is provided for the purpose of evaluating (66) the evaluation signal (20) on the basis of the detected signal (28).

8. Measuring device according to one of the preceding claims, **characterized in that** the control unit (10) is provided for the purpose of attenuating, in particular preventing, transmission (60) of the measurement signal (16) if the signal (28) is detected.

9. Measuring device according to one of the preceding claims, **characterized in that** the control unit (10) is provided for the purpose of controlling a transmission power on the basis of signal attenuation of the environment.

10. Measuring device according to one of the preceding claims, **characterized in that** the examination comprises a pulse examination (46) of the signal (28) .

11. Measuring device according to one of the preceding claims, **characterized in that** the control unit (10) is provided for the purpose of controlling transmission (60) of the measurement signal (16) on the basis of the pulses if the signal (28) is detected as a pulsed signal (28).

## Revendications

1. Appareil de mesure comprenant une unité d'émission (6) destiné à émettre (38, 60) un signal de mesure (16) se trouvant dans une plage de fréquences, une unité de détection (8) destinée à recevoir (40, 62) un signal d'interprétation (20) excité par le signal de mesure (16) et une unité de commande (10) destinée à interpréter (42, 66) le signal d'interprétation (20) en un résultat de mesure, l'unité de commande (10) étant conçue pour examiner la plage de fréquences avant l'émission (38, 60) du signal de mesure (16) en vue de la présence d'un signal (28) indépendant du signal de mesure (16), **caractérisé en ce que** l'unité de commande (10) est conçue pour commander une émission (60) du signal de mesure (16) en fonction de la reconnaissance d'une propriété de matériau dans l'environnement de l'unité d'émission (6).

2. Appareil de mesure selon la revendication 1, **caractérisé en ce que** l'unité de détection (8) est conçue pour un fonctionnement en bande ultra-large.

3. Appareil de mesure selon la revendication 1 ou 2, **caractérisé en ce que** l'examen comprend une détermination d'une puissance du signal (28).

4. Appareil de mesure selon l'une des revendications précédentes, **caractérisé en ce que** l'unité de commande (10) est conçue pour désactiver (32) un moyen d'antiparasitage avant l'examen.

5. Appareil de mesure selon l'une des revendications précédentes, **caractérisé en ce que** l'unité de commande (10) est conçue pour une inhibition d'une émission (38) du signal de mesure avant l'examen.

6. Appareil de mesure selon l'une des revendications précédentes, **caractérisé en ce que** l'examen inclut la détermination (52) d'une bande de fréquences du signal (28) .

7. Appareil de mesure selon l'une des revendications précédentes, **caractérisé en ce que** l'unité de commande (10) est conçue pour effectuer une interprétation (66) du signal d'interprétation (20) en fonction du signal (28) reconnu.

8. Appareil de mesure selon l'une des revendications précédentes, **caractérisé en ce que** l'unité de commande (10) est conçue pour, en cas de reconnaissance du signal (28), atténuer une émission (60) du signal de mesure (16), notamment l'inhiber.

9. Appareil de mesure selon l'une des revendications précédentes, **caractérisé en ce que** l'unité de commande (10) est conçue pour effectuer une commande d'une puissance d'émission en fonction d'une atténuation du signal de l'environnement.

10. Appareil de mesure selon l'une des revendications précédentes, **caractérisé en ce que** l'examen inclut un examen des impulsions (46) du signal (28).

11. Appareil de mesure selon l'une des revendications précédentes, **caractérisé en ce que** l'unité de commande (10) est conçue pour, dans le cas d'une reconnaissance du signal (28) en tant que signal pulsé (28), commander une émission (60) du signal de mesure (16) en fonction des impulsions.
